# EUROPÄISCHE PATENTANMELDUNG

(11) **EP 4 570 847 A1**
(43) Veröffentlichungstag der Anmeldung: **18.06.2025**
(21) Anmeldenummer: 23216994.6
(22) Anmeldetag: 15.12.2023
(51) Int. Cl.: C08J 5/24, B29C 70/08, B29C 70/12, B29C 70/14, B29C 70/50, C08K 7/06

(54) **TOWPREG**

(71) Anmelder: Teijin Carbon Europe GmbH, 42103 Wuppertal (DE)
(72) Erfinder: TER STEEG, Willem, 50259 Pulheim (DE); PÖHLER, Marco, 52072 Aachen (DE); KRAVAEV, Plamen, 41069 Mönchengladbach (DE)
(74) Vertreter: CPW GmbH

(57) **Zusammenfassung**

Die Anmeldung betrifft ein Verfahren zur Herstellung eines Towpregs. Das Verfahren weist die folgenden Schritte auf :Bereitstellen von kontinuierlichen Kohlenstofffasern, Spreizen der kontinuierlichen Kohlenstofffasern um ein Band zu erhalten, Bereitstellen von kurzen Kohlenstofffasern, Anordnen der kurzen Kohlenstofffasern auf dem Band, um einen Verbund zu erhalten, Verfestigen des Verbundes zu einem Towpreg durch Einwirkung von Druck und/oder erhöhter Temperatur. Das Verfahren ist dadurch gekennzeichnet dass, die kurzen Kohlenstofffasern im Wesentlichen parallel zueinander angeordnet sind und dass die kurzen Kohlenstofffasern zu mindestens 50% aus recyceltem Material.

## Beschreibung

Die Erfindung betrifft ein Towpreg aufweisend Kohlenstofffasern. Kohlenstofffasern haben sich im Laufe der letzten 150 Jahre zu einem gefragten Werkstoff entwickelt. Den Anfang dieser Entwicklung markiert die Erfindung der elektrischen Glühbirne, deren Glühfaden zunächst aus Kohlenstofffasern bestand, die durch Verkohlen von Bambus- oder anderen Pflanzenfasern gewonnen wurden. Derartige Glühfäden wurden erst später von hochtemperaturbeständigen Metalldrähten abgelöst.

Erst in der Zeit nach dem Zweiten Weltkrieg wurden Kohlenstofffasern als Konstruktionsmaterial mit herausragenden Eigenschaften entdeckt. Dabei sind besonders die geringe Dichte und gleichzeitig die hohe Reißfestigkeit von Kohlenstofffasern hervorzuheben. Die prädestiniert sie zur Herstellung von Bauteilen aus hochfesten Faserverbundwerkstoffen, bei denen Kohlenstofffasern, die dem Fachmann auch unter der Bezeichnung "Carbonfasern" oder schlicht "Carbon" bekannt sind, mit einem versteifenden Matrixmaterial, typischerweise einem Polymer kombiniert werden. Die geringe Dichte solcher kohlenstofffaserverstärkten Kunststoffe, die dem Fachmann unter der Abkürzung "CFK" geläufig sind, wird inzwischen in sehr vielen technischen Feldern genutzt. Neben der Herstellung kleinerer Gegenstände wie Stielen für Golf- oder Tennisschläger werden auch die Rümpfe ganzer Sportyachten und seit einigen Jahren sogar Großraum-Verkehrsflugzeuge ganz oder teilweise aus CFK gefertigt. Der geringen Dichte und der hohen Festigkeit von Kohlenstofffasern steht jedoch gegenüber, dass sich auf Kohlenstofffasern basierende Verbundmaterialien schlecht recyceln lassen. Dies ergibt sich aus der Tatsache, dass es in der Regel nicht oder nur durch einen erheblichen Aufwand möglich ist, die in eine Polymermatrix eingebetteten Kohlenstofffasern vom Matrixmaterial zu trennen und beide Komponenten einer weiteren Nutzung zuzuführen. Ein weiteres Erschwernis beim Recycling von Kohlenstofffasern ist, dass Kohlenstofffasern ähnlich wie duroplastische und elastomere Polymere nach ihrer stofflichen Vollendung nicht beliebig umgeformt werden können. Insbesondere ist es nicht möglich, einmal zum Beispiel durch Schneiden in kurze Form gebrachte Kohlenstofffasern wieder in längere Kohlenstofffasern zu überführen.

Aus diesen Gründen werden ausgediente Gegenstände aus CFK, verwandten Materialien und Vorstufen dazu, aber auch nicht benötigte Reste von Kohlenstofffasern einer thermischen Verwertung zugeführt und dementsprechend verbrannt - mit der Folge einer schlechten CO₂-Bilanz derartiger Produkte. Aufgabe der vorliegenden Anmeldung ist es nun, ein Verfahren bereit zu stellen, das eine Wiederverwendung von nicht mehr benötigten Gegenständen aus CFK oder verwandten Produkten oder Vorstufen dazu ebenso ermöglicht wie eine stoffliche Weiterverwendung von Kohlenstofffaserabfällen.

Es konnte überraschend gefunden werden, dass die Aufgabe gelöst wird durch ein Verfahren zur Herstellung eines Towpregs aufweisend die Schritte Bereitstellen mindestens einer kontinuierlichen Kohlenstofffaser, Spreizen der kontinuierlichen Kohlenstofffaser, um ein Band zu erhalten, Bereitstellen von kurzen Kohlenstofffasern, Anordnen der kurzen Kohlenstofffasern auf dem Band um einen Verbund zu erhalten, Verfestigen des Verbundes zu einem Towpreg durch Einwirkung von Druck und/oder erhöhter Temperatur, dadurch gekennzeichnet dass, die kurzen Kohlenstofffasern im Wesentlichen parallel zueinander angeordnet sind und dass die kurzen Kohlenstofffasern zu mindestens 50% aus recyceltem Material stammen und dass die kurzen Kohlenstofffasern einen Parallelisierungsgrad von mindestens 40% aufweisen, wobei der Parallelisierungsgrad mittels Stereophotogrammetrie, Computertomographie oder Wirbelstrommessungen bestimmt wurde.

Ein Towpreg im Sinne der vorliegenden Anmeldung ist ein Halbzeug, das Kohlenstofffasern und mindestens ein Matrixmaterial enthält. Kennzeichnend für ein Towpreg ist dabei, dass ein Towpreg - im Gegensatz zu in der Regel als "Prepreg" bezeichneten Halbzeugen - aus einem einzigen vollimprägnierten Carbonfaserroving besteht. Zentrale Funktion des im Towpreg enthaltenen Matrixmaterials ist es, dem Towpreg Formstabilität zu verleihen, die eine einfache Verarbeitung ermöglicht.

Typischerweise handelt es sich bei Towpregs um flexible, bandförmige Halbzeuge, die auf Rollen aufgewickelt können und genügend Matrixmaterial enthalten, um sicherzustellen, dass sie bei der Handhabung ihre bandförmige Gestalt beibehalten. Der Matrixanteil typischer Towpregs liegt bei 25-45 Gewichtsprozent.

Die Provenienz im Towpreg enthaltenen Kohlenstofffasern ist nicht eingeschränkt. Es kann sich dementsprechend um Kohlenstofffasern aus allen dem Fachmann bekannten Quellen handeln. Zu nennen sind in diesem Zusammenhang insbesondere Kohlenstofffasern, die durch die Oxidation und Carbonisierung von Polyacrylnitrilfasern, Cellulosefasern oder aus Teeren gewonnen wurden. Darüber hinaus kann das Towpreg auch Kohlenstofffasern aus unterschiedlichen Quellen enthalten. Die im Towpreg enthaltenen kontinuierlichen Kohlenstofffasern und die kurzen Kohlenstofffasern können aus unterschiedlichen Quellen stammen. Als "Quelle" wird im Sinne der vorliegenden Anmeldung das Material verstanden, aus dem die Kohlenstofffasern hergestellt werden. "Recycling" ist dementsprechend nicht als "Quelle" im Sinne der vorliegenden Anmeldung zu verstehen, da recycelte Kohlenstofffasern vor ihrer ersten Verwendung aus einer Quelle im Sinne der vorliegenden Anmeldung gewonnen wurden.

Im Folgenden werden die Begriffe "Faser" und "Roving" synonym verwendet. Beide Begriffe stehen für einen Verbund bzw. ein Bündel von Kohlenstofffilamenten.

Das Towpreg im Sinne der vorliegenden Anmeldung enthält mindestens einen kontinuierlichen Kohlenstoffroving. Unter dem Begriff "kontinuierlicher Kohlenstoffroving " werden in der vorliegenden Anmeldung Kohlenstofffilamentbündel verstanden, deren Filamentlänge im Vergleich zu ihrem Filamentdurchmesser nahezu unendlich groß ist. Ein typisches Kohlenstofffilament im Sinne der vorliegenden Anmeldung kann eine Länge von einem Meter oder mehr, mehreren Metern oder mehr oder auch mehreren hundert Metern oder mehr haben. Selbst Längen von etlichen Kilometern sind möglich.

Im Sinne der vorliegenden Anmeldung bestehen Kohlenstoffrovings aus mehreren, bis zu tausenden, Kohlenstofffaserfilamenten, die in der vorliegenden Anmeldung synonym auch als "Filamente" bezeichnet werden. Filamente sind somit als diejenigen Einheiten zu betrachten, aus denen sich der Kohlenstoffroving aufbaut. Die Filamente eines Kohlenstoffrovings können gegeneinander beweglich sein. Die Länge der Filamente, die einen Kohlenstoffroving aufbauen, entspricht dabei zumindest ungefähr der Länge des Kohlenstoffrovings. Dementsprechend sind kontinuierliche Kohlenstoffrovings aus Filamenten aufgebaut, für deren Länge gilt, was über die Länge von Kohlenstofffilamenten offenbart wurde. Ebenso sind kurze Kohlenstofffasern aus kurzen Fasern aufgebaut, für deren Länge sinngemäß das gilt, was für die Länge von kurzen Kohlenstofffasern offenbart wurde.

Die Kohlenstofffasern werden bei der Herstellung des Towpregs einem Spreizvorgang unterzogen. Darunter wird ein Vorgang verstanden, der darauf abzielt, die Kohlenstoffrovings, deren Querschnitt eine beliebige Geometrie aufweisen kann, in die Form eines Bandes zu bringen. Angestrebt wird dabei, dass die Zahl der übereinander liegenden Filamente möglichst gering sein soll. In einer Ausführungsform liegen in einem Towpreg im Durchschnitt noch 10, 5, 3 oder 2 Filamente übereinander. In einer Ausführungsform weist das Towpreg nur eine Lage von Filamenten auf.

Beim Spreizen können verschiedene Hilfsmittel wie beispielsweise mechanische Spreizstangen, Kämme, Luftdüsen, Gatter, etc. zum Einsatz kommen.

Das Towpreg im Sinne der vorliegenden Anmeldung enthält darüber hinaus kurze Kohlenstofffasern. Dabei sollen in der vorliegenden Anmeldung unter "kurzen Kohlenstofffasern" oder "Kurzfasern" alle Kohlenstofffasern verstanden werden, die eine Länge von einem halben Meter oder weniger aufweisen, insbesondere aber Kohlenstofffasern, die 3 mm und länger und 40 mm und kürzer sind. Kohlenstofffasern, die kürzer sind als 3 mm sind nicht geeignet, um die Anforderungen an die Ausrichtung, die die vorliegende Anmeldung stellt, zu erfüllen.

Die kurzen Kohlenstofffasern werden auf dem Band angeordnet, das durch die gespreizte kontinuierliche Kohlenstofffaser gebildet wird. Unter "Anordnen" wird dabei das Aufbringen in einer Art und Weise verstanden, die dazu führt, dass die Fasern vorzugsweise eine bestimmte Richtung einnehmen. Auf diese Weise wird ein Faserbündel erhalten. Dies kann auf alle dem Fachmann bekannten Weisen passieren. Denkbar ist beispielsweise ein Aufbringen mit Hilfe von Sieben oder Düsen, die nur Fasern mit einer bestimmten Ausrichtung passieren lassen. Auch ein Aufbringen von in viskosen Flüssigkeiten dispergierten Fasern, die durch Scherkräfte und/oder elektrische und/oder magnetische Felder ausgerichtet werden, ist möglich. Die Ausrichtung der Kurzfasern erfolgt entlang des Bandes. Die Kurzfasern erreichen dabei einen Parallelisierungsgrad von mindestens 40%. Im Sinne der vorliegenden Erfindung wird als Parallelisierungsgrad der prozentuelle Anteil der verwendeten Kurzfaser gekennzeichnet, die um nicht mehr als ±15° von der Faserorientierung des Trägermaterials abweichen.

Im Anschluss an das Aufbringen der Fasern auf das Band aus kontinuierlichen Kohlenstofffasern kann ein weiteres Band aus gespreizten kontinuierlichen Kohlenstofffasern auf die Lage aus kurzen Kohlenstofffasern aufgebracht werden, so dass das Towpreg eine Art Sandwichstruktur erhält, in der sich eine Lage von kurzen Kohlenstofffasern zwischen zwei Bändern aus gespreizten kontinuierlichen Kohlenstofffasern befindet. Die beiden Bänder aus gespreizten Kohlenstofffaserfilamenten können dabei zum Beispiel hinsichtlich Filamentanzahl, Matrixmaterial und Dicke die gleichen oder verschiedene Eigenschaften haben. Das Towpreg wird durch die Einwirkung von Hitze und/oder Druck verfestigt. Verfestigung bedeutet dabei im Sinne der vorliegenden Anmeldung, dass der Verbund in eine Form überführt wird, in dem die einzelnen Teile des Verbundes - die kontinuierlichen Kohlenstofffasern und die kurzen Kohlenstofffasern auf eine Weise miteinander verbunden sind, dass sie bei den normalen Krafteinwirkungen, die bei der Handhabung und Verarbeitung auftreten, ihre Form behalten. Hierbei kann zum Beispiel ein Matrixmaterial aber auch andere Formen der Verbindung wie zum Beispiel mechanische Verschlingungen eine Rolle spielen. Unter der Handhabung wird dabei das Auf- und Abwickeln ebenso wie verstanden wie das Ablegen in einer Form oder das Imprägnieren mit einem Matrixmaterial.

Die kurzen Kohlenstofffasern stammen zu mindestens 50% aus recyceltem Material. Recyceltes Material bedeutet im Sinne der vorliegenden Anmeldung, dass die kurzen Kohlenstofffasern solche sind, die aus Bauteilen oder Gegenständen gewonnen wurden, die für den ihnen zugedachten Zweck nicht oder nicht mehr geeignet sind und deswegen ausgesondert wurden. Unter recyceltem Material werden im Sinne der vorliegenden Anmeldung allerdings auch solche Kohlenstofffasern verstanden, die bei der Produktion oder der Verarbeitung als Abfall zum Beispiel in Form von Verschnitt oder Produktionsfehlern angefallen sind, die dementsprechend nie einem sinnvollen Zweck gedient haben und die, wenn sie nicht im Sinne der vorliegenden Anmeldung verwendet werden, entsorgt werden würden. Zusammenfassend kann also gesagt werden, dass unter recyceltem Material generell alle Arten von Kohlenstofffasern verstanden werden, die entsorgt werden würden, wenn sie nicht im Sinne der vorliegenden Anmeldung verwendet werden würden. Es ist wichtig noch einmal zu betonen, dass die Einstufung als recyceltes Material nichts mit der ursprünglichen Quelle, also dem Ausgangsmaterial der Kohlenstofffasern zu tun hat. Es ist außerdem möglich, dass Kohlenstofffasern aus verschiedenen Quellen gemeinsam als recyceltes Material anfallen.

Um recyceltes Material zu gewinnen, ist es zum Beispiel möglich, Rovings, Prepregs oder Towpregs aus kohlenstofffaserverstärktem Kunststoff oder Vorstufen davon einem Recycling zuzuführen.

In einer Ausführungsform enthalten die kurzen Kohlenstofffasern ein erstes Matrixmaterial. Dieses erste Matrixmaterial kann unmittelbar vor dem Aufbringen auf das Band aus kontinuierlichen Kohlenstofffasern auf den kurzen Kohlenstofffasern bereitgestellt werden. Dies ist in allen dem Fachmann bekannten Weisen möglich. Denkbar ist beispielsweise das Vermischen oder Besprühen der Fasern mit einem flüssigen Matrixmaterial, das Vermischen der Fasern mit einem Matrixmaterial in fester Form wie beispielsweise entsprechenden Pulvern oder Fasern. Darüber hinaus ist es möglich, dass das Matrixmaterial gemeinsam mit den kurzen Kohlenstofffasern recycelt wurde und dementsprechend bereits aus der vorherigen Verwendung mit den kurzen Kohlenstofffasern verbunden ist. In diesem Fall ist es auch möglich, dass die kurzen Kohlenstofffasern aus Gegenständen gewonnen wurden, die kontinuierliche Kohlenstofffasern enthielten, die mit dem späteren ersten Matrixmaterial versteift waren. Durch Zerkleinern des besagten Gegenstandes werden dann kurze Kohlenstofffasern gewonnen, die dann Teil des Verbundes nach der vorliegenden Anmeldung werden.

In einer Ausführungsform handelt es sich bei dem ersten Matrixmaterial um ein thermoplastisches Matrixmaterial. Darunter werden Matrixmaterialien verstanden, die beim Erwärmen weich oder flüssig und damit verformbar werden und beim Erkalten wieder erstarren ohne dabei großen chemischen Veränderungen zu unterliegen. Ein thermoplastisches erstes Matrixmaterial hat den Effekt, dass es durch Erhitzen leicht umformbar ist und somit besonders gut geeignet ist, um den Verbund durch die Einwirkung von Hitze und Druck zu verfestigen. Typische thermoplastische Matrixmaterialien sind dem Fachmann gut bekannt. Zu nennen sind in diesem Zusammenhang zum Beispiel, aber nicht ausschließlich, Polyolefine wie Polyethylen und Polypropylen, Polyamide wie Polyamid-6, Polyamid-6,6 oder Polyamid-4,10 oder Polyester wie Polyethylenterephthalat, Polytriphenylenterephthalat, Polybutylenterephthalat oder Polyethylennaphthylat. In einer Ausführungsform sind die kurzen Kohlenstofffasern im Wesentlichen parallel zu den kontinuierlichen Kohlenstofffasern ausgerichtet. "Im Wesentlichen parallel" bedeutet dabei, dass mindestens 40% der kurzen Kohlenstofffasern so ausgerichtet sind, dass sie in einem Winkel von nicht mehr als 15° zu den kontinuierlichen Kohlenstofffasern stehen.

Durch eine solche Anordnung ergibt sich ein Towpreg, der eine besonders große Zugfestigkeit in der Richtung der kontinuierlichen Kohlenstofffasern aufweist.

In einer Ausführungsform kann das Towpreg gemäß der vorliegenden Anmeldung ein zweites Matrixmaterial aufweisen. Das zweite Matrixmaterial kann dabei zum Beispiel in den kontinuierlichen Kohlenstofffasern enthalten sein. Es kann zum Beispiel als Tränkung, Imprägnierung oder Oberflächenbehandlung, die dem Fachmann auch als "Sizing" oder "Schlichte" bekannt ist, aufgetragen sein. Das Matrixmaterial kann in diesem Zusammenhang verschiedene Funktionen annehmen. Es kann beispielsweise dazu dienen, das Band aus kontinuierlichen Kohlenstofffasern in Form zu halten, es kann als Haftmittel dienen, um zu ermöglichen, dass die kurzen Kohlenstofffasern auf dem Band haften, es kann als Gleitmittel dienen um die Verarbeitung der kontinuierlichen Kohlenstofffasern zu erleichtern. Möglich sind außerdem Kombinationen aus allen genannten Funktionen.

Bei dem zweiten Matrixmaterial kann es sich dementsprechend um eine breite Auswahl an verschiedenen Substanzen handeln. Denkbar sind beispielsweise Siliconöle, fette Öle, Mineralöle oder Wachse als Gleitmittel, thermoplastische Matrixmaterialen, die in Form von Beschichtungen, Pulvern oder als in das Band von kontinuierlichen Kohlenstofffasern eingebetteten Bindefasern oder Bindefilamenten vorliegen können. Als thermoplastische Matrixmaterialien sind in diesem Zusammenhang zum Beispiel, aber nicht ausschließlich, Polyolefine wie Polyethylen und Polypropylen, Polyamide wie Polyamid-6, Polyamid-6,6 oder Polyam id-4,10 oder Polyester wie Polyethylenterephthalat, Polytriphenylenterephthalat, Polybutylenterephthalat oder Polyethylennaphthylat zu nennen.

In einer Ausführungsform handelt es sich bei dem zweiten Matrixmaterial um ein duroplastisches Matrixmaterial. Duroplastische Matrixmaterialien ermöglichen eine besonders starke Versteifung der aus dem Towpreg gefertigten Bauteile, erfordern aber eine Härtung, wenn das aus dem Towpreg gefertigte Bauteil seine endgültige Form erreicht hat, weil duroplastische Matrixmaterialien nach dem Aushärten nicht mehr verformbar sind. Das zweite Matrixmaterial kann deswegen in Form einer oder mehrerer Vorstufen in dem Towpreg vorliegen. Mindestens eine Vorstufe kann teilweise polymerisiert sein um einen festen oder zähflüssigen Zustand zu erreichen, in dem die Vorstufe zum zweiten Matrixmaterial das Towpreg für die weitere Verarbeitung in Form hält. Die Vorstufe kann eine weitere Vorstufe enthalten, die unter bestimmten Bedingungen, zum Beispiel der Einwirkung von Druck und/oder Hitze mit der erstgenannten Vorstufe zum duroplastischen Matrixmaterial reagiert. Die Vorstufen können dabei ein homogenes Gemisch ebenso bilden wie eine Dispersion, bei der zum Beispiel eine Vorstufe eine flüssige, zähflüssige oder amorphe feste Phase bildet während eine weitere Vorstufe zum Beispiel in Form von Partikeln in die erstgenannte Vorstufe eingebettet ist. Bei den Vorstufen kann es sich beispielsweise um vorpolymerisierte Epoxidharze wie zum Beispiel auf Bisphenol A basierende Epoxidharze handeln. Derartige Komponenten sind dem Fachmann als "Binder" bekannt. Als weitere, in Partikelform in der vorgenannten Vorstufe vorliegende Vorstufe kann ein sogenannter "Härter" zum Einsatz kommen. Eine in dieser Funktion gebräuchliche Substanz ist Dicyandiamid.

Die Anmeldung betrifft ferner ein Towpreg. Für das Towpreg gelten, soweit passend, die Ausführungen zum Verfahren zur Herstellung eines Towpregs. Ebenso sollen die folgenden Ausführungen zum Towpreg auch für das vorher beschriebenen Verfahren gelten. Das Towpreg weist ein gespreiztes Band aus kontinuierlichen Kohlenstofffasern, kurze Kohlenstofffasern, sowie mindestens ein Matrixmaterial auf und ist dadurch gekennzeichnet, dass die kurzen Kohlenstofffasern zu mindestens 40% aus recyceltem Material stammen, die kurzen Kohlenstoffasern auf dem gespreizten Band aus kontinuierlichen Kohlenstofffasern angeordnet sind, die kurzen Kohlenstofffasern einen Parallelisierungsgrad von mindestens 40% aufweisen.

Unter einem gespreizten Band wird eine kontinuierliche Kohlenstofffaser verstanden, in der die Filamente in stärkerem Maße nebeneinander als übereinander angeordnet sind, so dass ein flacher Querschnitt erzielt wird, der zum Beispiel die Form eines Rechtecks, eines Ovals oder eines Trapezes haben kann. Angestrebt wird dabei, dass die Zahl der übereinander liegenden Filamente möglichst gering sein soll. In einer Ausführungsform liegen in einem Towpreg im Durchschnitt noch 10, 5, 3 oder 2 kontinuierliche Filamente übereinander. In einer Ausführungsform weist das Towpreg nur eine Lage von kontinuierlichen Filamenten auf.

Bei dem Matrixmaterial kann es sich um ein polymeres Material im weitesten Sinne handeln, das in dem Band aus kontinuierlichen Kohlenstofffasern ebenso enthalten sein kann wie in den kurzen Kohlenstofffasern oder in diesen beiden Komponenten. Es kann sich dabei um Materialien mit verschiedenen Funktionen handeln. Siliconöle, fette Öle, Mineralöle oder Wachse können als Schmiermittel fungieren und so das Verarbeiten und die Handhabung des Towpregs erleichtern. Es kann sich auch um Bindemittel und/oder Klebstoffe handeln, die den mechanischen Zusammenhalt der Filamente innerhalb der kontinuierlichen Kohlenstofffasern untereinander und/oder die Formstabilität des Towpregs verbessern. Bei derartigen Bindemitteln und/oder Klebstoffen kann es sich zum Beispiel um Polymere aus der Gruppe der Acrylate oder Methacrylate handeln. Ebenfalls möglich ist eine Funktion des Matrixmaterials als mechanische Versteifung. Als thermoplastische Matrixmaterialien sind in diesem Zusammenhang zum Beispiel Polyolefine wie Polyethylen und Polypropylen, Polyamide wie Polyamid-6, Polyamid-6,6 oder Polyamid-4,10 oder Polyester wie Polyethylenterephthalat, Polytriphenylenterephthalat, Polybutylenterephthalat oder Polyethylennaphthylat zu nennen.

In einer Ausführungsform handelt es sich bei dem Matrixmaterial um ein duroplastisches Matrixmaterial. Duroplastische Matrixmaterialien ermöglichen eine besonders starke Versteifung der aus dem Towpreg gefertigten Bauteile, erfordern aber eine Härtung, wenn das aus dem Towpreg gefertigte Bauteil seine endgültige Form erreicht hat, weil duroplastische Matrixmaterialien nach dem Aushärten nicht mehr verformbar sind. Das Matrixmaterial kann deswegen in Form einer oder mehrerer Vorstufen in dem Towpreg vorliegen. Mindestens eine der Vorstufen kann teilweise polymerisiert sein um einen festen oder zähflüssigen Zustand zu erreichen, in dem die Vorstufe zum Matrixmaterial das Towpreg für die weitere Verarbeitung in Form hält. Die Vorstufe kann eine weitere Vorstufe enthalten, die unter bestimmten Bedingungen, zum Beispiel der Einwirkung von Druck und/oder Hitze mit der erstgenannten Vorstufe zum duroplastischen Matrixmaterial reagiert.

Die Vorstufen können dabei ein homogenes Gemisch ebenso bilden wie eine Dispersion, bei der zum Beispiel eine Vorstufe eine flüssige, zähflüssige oder amorphe feste Phase bildet während eine weitere Vorstufe zum Beispiel in Form von Partikeln in die erstgenannte Vorstufe eingebettet ist. Bei den Vorstufen kann es sich beispielsweise um vorpolymerisierte Epoxidharze wie zum Beispiel auf Bisphenol A basierende Epoxidharze handeln. Derartige Komponenten sind dem Fachmann als "Binder" bekannt. Als weitere, in Partikelform in der vorgenannten Vorstufe vorliegende Vorstufe kann ein sogenannter "Härter" zum Einsatz kommen. Eine in dieser Funktion gebräuchliche Substanz ist Dicyandiamid.

In einer Ausführungsform kann das Towpreg mehr als ein Matrixmaterial enthalten. Die verschiedenen Matrixmaterialien können dabei aus verschiedenen der oben diskutierten Gruppen stammen oder es kann sich um mehrere Matrixmaterialien aus derselben Gruppe handeln. Unterschiedliche Matrixmaterialien können dabei unterschiedliche Funktionen im Towpreg erfüllen. In einer Ausführungsform sind in den kontinuierlichen Kohlenstofffasern andere Matrixmaterialien enthalten als in den kurzen Kohlenstofffasern. In einer Ausführungsform handelt es sich bei dem Matrixmaterial, das in den kontinuierlichen Kohlenstofffasern enthalten ist, um ein duroplastisches Matrixmaterial, wobei alle genannten Materialien benutzt und miteinander kombiniert werden können. In einer Ausführungsform handelt es sich bei dem Matrixmaterial in den kurzen Kohlenstofffasern um ein thermoplastisches Matrixmaterial, wobei alle genannten Materialien benutzt und miteinander kombiniert werden können. In einer Ausführungsform stammt das in den kurzen Kohlenstofffasern enthaltene Matrixmaterial aus den recycelten Gegenständen, aus denen die kurzen Kohlenstofffasern gewonnen wurden.

Die kurzen Kohlenstofffasern werden auf dem Band aus kontinuierlichen Kohlenstofffasern angeordnet. Die kurzen Kohlenstofffasern weisen dementsprechend eine Regelmäßigkeit in ihrer räumlichen Anordnung auf. Diese Regelmäßigkeit spiegelt sich im Parallelisierungsgrad der Fasern wieder, der mindestens 40% beträgt, wobei der Parallelisierungsgrad nach mittels Stereophotogrammetrie, Computertomographie oder Wirbelstrommessungen gemessen wurde.

Die kurzen Kohlenstofffasern stammen zu mindestens 40% aus recyceltem Material. Recyceltes Material bedeutet im Sinne der vorliegenden Anmeldung, dass die kurzen Kohlenstofffasern solche sind, die entweder aus Bauteilen oder Gegenständen gewonnen wurden, die für den ihnen zugedachten Zweck nicht oder nicht mehr geeignet sind und deswegen ausgesondert wurden. Unter recyceltem Material werden im Sinne der vorliegenden Anmeldung allerdings auch solche Kohlenstofffasern verstanden, die bei der Produktion oder der Verarbeitung als Abfall zum Beispiel in Form von Verschnitt oder Produktionsfehlern angefallen sind, die dementsprechend nie einem sinnvollen Zweck gedient haben und die, wenn sie nicht im Sinne der vorliegenden Anmeldung verwendet werden, entsorgt werden würden. Zusammenfassend kann also gesagt werden, dass unter recyceltem Material generell alle Arten von Kohlenstofffasern verstanden werden, die entsorgt werden würden, wenn sie nicht im Sinne der vorliegenden Anmeldung verwendet werden würden. Es ist wichtig noch einmal zu betonen, dass die Einstufung als recyceltes Material nichts mit der ursprünglichen Quelle, also dem Ausgangsmaterial der Kohlenstofffasern zu tun hat. Es ist außerdem möglich, dass Kohlenstofffasern aus verschiedenen Quellen gemeinsam als recyceltes Material anfallen.

Um recyceltes Material zu gewinnen, ist es zum Beispiel möglich, Rovings, Prepregs oder Towpregs aus kohlenstofffaserverstärktem Kunststoff oder Vorstufen davon einem Recycling zuzuführen. Unter Rovings werden generell bandförmige Halbzeuge verstanden, die Kohlenstofffasern enthalten.

In einer Ausführungsform sind die kurzen Kohlenstofffasern im Wesentlichen parallel zu den kontinuierlichen Kohlenstofffasern angeordnet.

In einer Ausführungsform sind die kurzen Kohlenstofffasern im Wesentlichen parallel zu den kontinuierlichen Kohlenstofffasern ausgerichtet. "Im Wesentlichen parallel" bedeutet dabei, dass mindestens 40% der kurzen Kohlenstofffasern so ausgerichtet sind, dass sie in einem Winkel von nicht mehr als 15° zu den kontinuierlichen Kohlenstofffasern stehen.

Durch eine solche Anordnung ergibt sich ein Towpreg, das eine besonders große Zugfestigkeit in der Richtung der kontinuierlichen Kohlenstofffasern aufweist.

In einer Ausführungsform kann das Towpreg nach der vorliegenden Anmeldung ein weiteres Band aus kontinuierlichen Kohlenstofffasern aufweisen, das auf der Lage aus kurzen Kohlenstofffasern angeordnet ist, so dass sich eine Art Sandwichstruktur ergibt, in der sich eine Lage kurzer Kohlenstofffasern zwischen zwei Bändern aus kontinuierlichen Kohlenstofffasern befindet. Die beiden Bänder aus kontinuierlichen Kohlenstofffasern können hinsichtlich ihrer Dicke, der Anzahl und der Stärke der enthaltenen Filamente und der eventuell enthaltenen Matrixmaterialien identisch oder verschieden sein.

## Patentansprüche

1. Verfahren zur Herstellung eines Towpregs aufweisend die Schritte
• Bereitstellen von kontinuierlichen Kohlenstofffasern,
• Spreizen der kontinuierlichen Kohlenstofffasern, um ein Band zu erhalten,
• Bereitstellen von kurzen Kohlenstofffasern,
• Anordnen der kurzen Kohlenstofffasern auf dem Band, um einen Verbund zu erhalten,
• Verfestigen des Verbundes zu einem Towpreg durch Einwirkung von Druck und/oder erhöhter Temperatur,
**dadurch gekennzeichnet dass**,
die kurzen Kohlenstofffasern im Wesentlichen parallel zueinander angeordnet sind und dass
die kurzen Kohlenstofffasern zu mindestens 50% aus recyceltem Material stammen und dass die kurzen Kohlenstofffasern einen Parallelisierungsgrad von mindestens 40% aufweisen, wobei der Parallelisierungsgrad mittels Stereophotogrammetrie, Computertomographie oder Wirbelstrommessungen bestimmt wurde.

2. Verfahren nach Anspruch 1, wobei die kurzen Kohlenstofffasern ein erstes Matrixmaterial enthalten.

3. Verfahren nach Anspruch 2, wobei es sich bei dem ersten Matrixmaterial um thermoplastisches Matrixmaterial handelt.

4. Verfahren nach einem oder mehreren der vorherigen Ansprüche, wobei es sich bei dem recycelten Material um recycelte Rovings, Prepregs oder Towpregs handelt.

5. Verfahren nach einem oder mehreren der vorherigen Ansprüche, wobei die kurzen Kohlenstofffasern im Wesentlichen parallel zu den kontinuierlichen Kohlenstofffasern ausgerichtet sind.

6. Verfahren nach einem oder mehreren der vorherigen Ansprüche, wobei der Verbund vor dem Verfestigen mit einem zweiten Matrixmaterial versehen wird.

7. Verfahren nach Anspruch 6, wobei es sich bei dem zweiten Matrixmaterial um ein duroplastisches Matrixmaterial handelt.

8. Towpreg aufweisend
• ein gespreiztes Band aus kontinuierlichen Kohlenstofffasern,
• kurze Kohlenstofffasern, sowie
• mindestens ein Matrixmaterial,
**dadurch gekennzeichnet, dass**
- die kurzen Kohlenstofffasern zu mindestens 40% aus recyceltem Material stammen,
- die kurzen Kohlenstoffasern auf dem gespreizten Band aus kontinuierlichen Kohlenstofffasern angeordnet sind,
- die kurzen Kohlenstofffasern einen Parallelisierungsgrad von mindestens 40% aufweisen.

9. Towpreg nach Anspruch 8, wobei die kurzen Kohlenstofffasern ein erstes Matrixmaterial enthalten.

10. Towpreg nach Anspruch 9, wobei es sich bei dem Matrixmaterial um ein thermoplastisches Material handelt.

11. Towpreg nach einem oder mehreren der Ansprüche 8 bis 10, wobei es sich bei dem recycelten Material um recycelte Rovings, Prepregs oder Towpregs handelt.

12. Towpreg nach einem oder mehreren der Ansprüche 8 bis 11, wobei es die kurzen Kohlenstofffasern im Wesentlichen parallel zu den kontinuierlichen Kohlenstofffasern angeordnet sind.

13. Towpreg nach einem oder mehreren der Ansprüche 8 bis 12, wobei das Towpreg ein zweites Matrixmaterial enthält.

14. Towpreg nach Anspruch 13, wobei das zweite Matrixmaterial duroplastisch ist.

15. Bauteil, aufgebaut teilweise oder vollständig aus dem Towpreg gemäß der Ansprüche 8 bis 14.
